# EUROPEAN PATENT APPLICATION

(11) **EP 1 741 335 A1**
(43) Date of publication of application: **10.01.2007**
(21) Application number: 06111404.7
(22) Date of filing: 20.03.2006
(51) Int. Cl.: A01K 85/01

(54) **Artificial bait for cephalopods**

(30) Priority: 06.07.2005 IT BO20050456
(71) Applicant: Holding Ferrari S.R.L., 40018 San Pietro in Casale (Prov. of Bologna) (IT)
(72) Inventor: Ferrari, Federico, 40018, San Pietro in Casale BO (IT)
(74) Representative: Modiano, Micaela Nadia

(57) **Abstract**

An artificial bait (1) for cephalopods, of the type comprising a substantially tapering body (2) shaped substantially like a stylized fish, which has, at at least one end, at least one hook (3) with a substantially pointed tip. The bait (1) comprises an internal cavity (6) for accommodating at least one battery (7) and a circuit (8), connected thereto, for supplying power to at least one emitter of an enticing signal.

## Description

The present invention relates to an artificial bait for cephalopods, particularly for catching illexes and squids.

To fish squids and illexes, elongated artificial baits (in some cases shaped like a small fish) are lowered from the boat to various depths and are moved until the cephalopod attacks them, gripping them with its tentacles.

At least one ring of pointed hooks is provided in the end portion of the bait, which lock the illex, allowing its retrieval, when the fisherman rears back.

Fish-shaped baits are generally brightly colored and comprise portions which reflect light strongly in order to attract the attention of cephalopods with reflected-light effects.

On days with little light, during night fishing or when fishing at considerable depth, these light effects in practice are nonexistent, making the bait less enticing.

Other types of bait which are substantially cylindrical or frustum-shaped comprise internally light sources with corresponding power supply batteries: the luminous bait is therefore extremely enticing for cephalopods even when lighting is scarce or nil (night fishing or deep fishing).

Substantially cylindrical or frustum-shaped baits, however, are less enticing than fish-shaped ones when they are visible to the cephalopod.

The aim of the present invention is to obviate the cited drawbacks and meet the above-mentioned requirements, by providing an artificial bait for cephalopods which reproduces approximately the contour of a fish and emits a signal which is enticing for cephalopods.

An object of the present invention is to provide an artificial bait for cephalopods which is fish-shaped and emits a luminous signal.

Within this aim, another object of the present invention is to provide a structure which is simple, relatively easy to provide in practice, safe in use, effective in operation, and has a relatively low cost.

This aim and these and other objects which will become better apparent hereinafter, are achieved by the present artificial bait for cephalopods, of the type which comprises a substantially tapering body shaped substantially like a stylized fish, which has, at at least one end, at least one hook with a substantially pointed tip, characterized in that it comprises an internal cavity for accommodating at least one battery and a circuit, connected thereto, for supplying power to at least one emitter of an enticing signal.

Further characteristics and advantages of the invention will become better apparent from the following detailed description of a preferred but not exclusive embodiment of an artificial bait for cephalopods, illustrated by way of non-limiting example in the accompanying drawings, wherein:

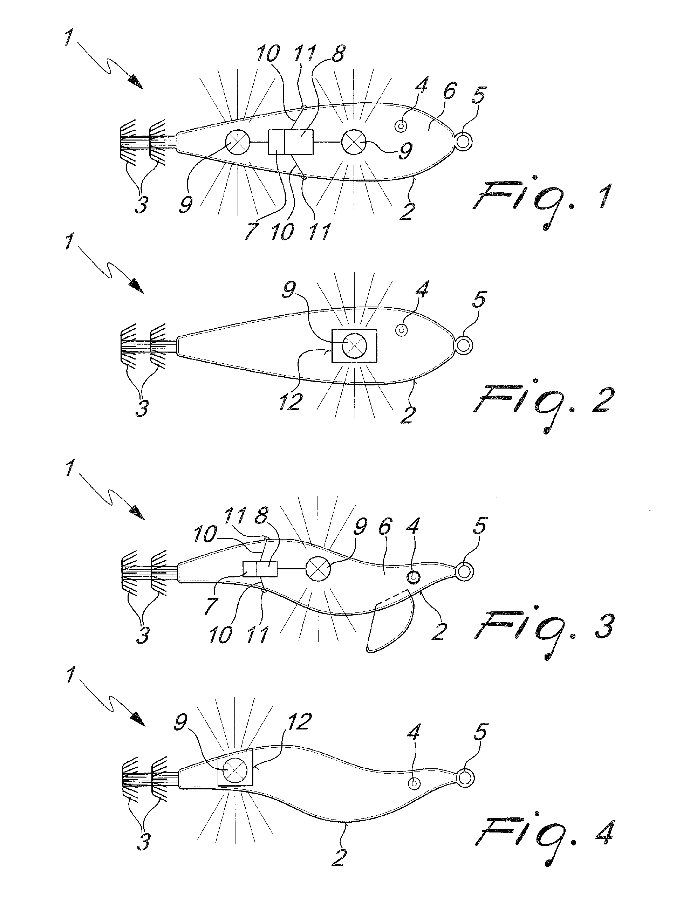

Figure 1 is a side view of a first possible embodiment of an artificial bait for cephalopods according to the invention;
Figure 2 is a side view of a second possible embodiment of an artificial bait for cephalopods according to the invention;
Figure 3 is a side view of a third possible embodiment of an artificial bait for cephalopods according to the invention;
Figure 4 is a side view of a fourth possible embodiment of an artificial bait for cephalopods according to the invention.

With reference to the figures, the reference numeral 1 generally designates an artificial bait for cephalopods.

The artificial bait 1 is the of the type generally known as squid jig and comprises a substantially tapering body 2 which is substantially shaped like a stylized fish.

The body 2 has at least one ring of hooks 3 with a substantially pointed tip at the end which corresponds to the caudal fin of the fish and has, at the end which corresponds to the head of the fish, a picture of a fish eye 4 and a small ring 5 for connecting it to the line.

The body 2 also comprises an internal cavity 6, which accommodates internally at least one battery 7 and a circuit 8 connected thereto in order to supply power to at least one emitter of an enticing signal, in the specific case a light source 9.

According to the constructive solutions shown in the figure, the light source 9 is a light-emitting diode, known as LED; the use of an LED has the advantage of allowing good lighting and therefore good visibility despite distinctly low energy consumption.

As it can be seen in the figure, the light sources 9 may also be two or (a solution which is not shown) several ones distributed along the body 2 and supplied with power so that their lighting is mutually staggered, producing light effects which have an enticing effect on cephalopods.

According to alternative embodiments (not shown in the figure), the emitter of enticing signal might be a source of vibrations of a preset frequency, the propagation of which in water has an enticing action on cephalopods.

The chosen frequency might be the frequency of a sound which propagates very far (in order to draw the cephalopods) or a true low-frequency vibration which simulates in some way the vibrations limited by a fish in distress (for example, an injured one), in order to stimulate the aggressiveness of squids and illexes.

The circuit 8 comprises two terminals 10, an end 11 of which substantially leads outside of the surface of the baits 1: when the bait 1 is immersed in water, the ends 11 are short-circuited together due to the electrical conductivity of the water (particularly seawater, due to the dissolved salts).

Substantially, the pair of terminals 10 with protruding ends 11 constitutes the switch for activating the source 9 (or, in general, the signal emitter), and the circuit is closed only when the ends 11 are short-circuited and therefore the bait 1 is immersed in water.

According to an embodiment which is alternative to the one shown in the figure, the circuit 8 comprises an actual switch for closing it in order to manage the electrical power supply of the source 9 (or in general of the signal emitter).

In order to optimize the visual yield if the signal emitter is a source 9, the body 2 of the bait 1 is made, optionally monolithically, of substantially transparent material. As an alternative, the body 2 can be variously colored and can have at least one substantially transparent portion 12 arranged substantially proximate to the receptacle of the light source 9.

The circuit 8 comprises an intermittent control unit for managing the source 9 so that it flashes according to a certain preset timing criterion; if there are a plurality of sources 9, they are managed so as to flash alternately, producing enticing light effects.

In a bait 1 according to the invention it is also possible to arrange emitters having different characteristics and combine for example at least one LED with at least one source of vibrations in order to combine the enticing effect thereof.

The operation of the invention is as follows: by immersing the bait 1 in water, it begins to emit an enticing signal, facilitating the attack of said bait by cephalopods.

It has thus been shown that the invention achieves the intended aim and objects.

The invention thus conceived is susceptible of numerous modifications and variations, all of which are within the scope of the appended claims.

All the details may further be replaced with other technically equivalent ones.

In the exemplary embodiments shown, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

In practice, the materials used, as well as the shapes and the dimensions, may be any according to requirements without thereby abandoning the scope of the protection of the appended claims.

The disclosures in Italian Patent Application No. BO2005A000456 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An artificial bait for cephalopods, of the type comprising a substantially tapering body (2) shaped substantially like a stylized fish, which has, at at least one end, at least one hook (3) with a substantially pointed tip, **characterized in that** it comprises an internal cavity (6) for accommodating at least one battery (7) and a circuit (8), connected thereto, for supplying power to at least one emitter of an enticing signal.

2. The bait according to claim 1, **characterized in that** said emitter of an enticing signal is a light source (9).

3. The bait according to claim 2, **characterized in that** said light source (9) is a light-emitting diode known as LED.

4. The bait according to claim 1, **characterized in that** said emitter of an enticing signal is a source of vibrations of preset frequency, the propagation of which in water has an enticing effect on cephalopods.

5. The bait according to claim 1, **characterized in that** said circuit (8) comprises two terminals (10), the end (11) of which substantially leads outside the surface of said bait (1), said ends (11) being mutually short-circuited when they are immersed in water due to the electrical conductivity of the water itself.

6. The bait according to claim 5, **characterized in that** said pair of terminals (10) with protruding ends (11) constitutes the switch for activating said signal emitter, said circuit (8) being closed only when said ends (11) are short-circuited and therefore the bait (1) is immersed in water.

7. The bait according to claim 1, **characterized in that** said circuit (8) comprises a switch for managing the electric power supply of said source.

8. The bait according to one or more of the preceding claims, **characterized in that** the body (2) of said bait (1) is made, optionally monolithically, of substantially transparent material.

9. The bait according to one or more of the preceding claims, **characterized in that** the body (2) of said bait (1) is variously colored and has at least one portion (12) which is arranged substantially proximate to the receptacle of said light source (9) and is substantially transparent.

10. The bait according to one or more of the preceding claims, **characterized in that** said circuit (8) comprises an intermittent control unit for the management of said signal emitter.

11. The bait according to one or more of the preceding claims, **characterized in that** said emitters are at least two, are optionally mutually different, and are distributed along said body (2).
